# FASCICULE DE BREVET EUROPEEN

(11) **EP 3 137 887 B1**
(45) Date de publication et mention de la délivrance du brevet: **22.06.2022**
(21) Numéro de dépôt: 15718920.0
(22) Date de dépôt: 29.04.2015
(51) Int. Cl.: G01N 25/72

(54) **PROCÉDÉ D'EXAMEN PHOTOTHERMIQUE ET ENSEMBLE D'EXAMEN CORRESPONDANT**
VERFAHREN ZUR PHOTOTHERMISCHEN UNTERSUCHUNG UND ZUGEHÖRIGE UNTERSUCHUNGSEINHEIT
PHOTOTHERMAL EXAMINATION METHOD AND CORRESPONDING EXAMINATION UNIT

(30) Priorité: 30.04.2014 FR 1453989
(43) Date de publication de la demande: 08.03.2017
(73) Titulaire: FRAMATOME, 92400 Courbevoie (FR)
(72) Inventeur: CAULIER, Yannick, 04100 Manosque (FR); TAGLIONE, Matthieu, 71370 Saint Etienne en Bresse (FR)
(74) Mandataire: Lavoix
(86) Numéro de dépôt international: PCT/EP2015/059421
(87) Numéro de publication internationale: WO 2015/166007

(56) Documents cités:
- WO-A1-98/39640
- US-A1- 2003 030 002
- US-A1- 2010 292 938
- LI T ET AL: "Crack imaging by scanning laser-line thermography and laser-spot thermography;Crack imaging by scanning LTT and LST", MEASUREMENT SCIENCE AND TECHNOLOGY, IOP, BRISTOL, GB, vol. 22, no. 3, 1 février 2011 (2011-02-01), page 35701, XP020191583, ISSN: 0957-0233, DOI: 10.1088/0957-0233/22/3/035701

## Description

L'invention concerne la recherche de défaut dans des composants industriels en général.

Plus précisément, l'invention concerne selon un premier aspect un procédé d'examen photothermique d'une pièce, comprenant une première séquence ayant les étapes suivantes :
- étape 11 : balayer une première zone d'une surface de la pièce avec un premier élément d'apport de chaleur, le balayage étant réalisé selon une pluralité de lignes sensiblement parallèles à une première direction ;
- étape 12: acquérir une image du rayonnement infrarouge émis par ladite première zone à l'aide d'un premier élément de surface photosensible.

Un tel procédé est connu par exemple de WO 98/39640.

Selon ce procédé, le premier élément d'apport de chaleur est une ligne créée par un laser, déplacée à la surface de la pièce. Une zone de détection est déplacée elle aussi à la surface de la pièce, en suivant la trajectoire de l'élément d'apport de chaleur, avec un retard temporel positif ou nul. La zone de détection est scrutée en permanence par la première surface photosensible.

Pour réaliser l'inspection de la première zone, il est nécessaire de réaliser quatre balayages successifs : un aller suivant la première direction, un retour suivant la première direction, un aller suivant une seconde direction, qui peut être perpendiculaire à la première, et un retour suivant la seconde direction.

Le procédé d'examen est donc relativement long : le temps d'examen est de l'ordre de 3 à 4 heures par m² de surface à inspecter.

Dans ce contexte, l'invention vise à proposer un procédé qui soit plus rapide.

US2003/030002 suggère de balayer la surface de la pièce en utilisant trois éléments d'apport de chaleur. Ces éléments d'apport de chaleur balayent trois zones de la pièce entièrement séparées l'une de l'autre, de manière simultanée.

US 2010/292938 décrit, dans la variante de réalisation représentée sur la figure 2, un procédé et un dispositif d'examen photothermique dans lequel une zone supérieure de la pièce à contrôler est balayée avec un premier inducteur, et simultanément une seconde zone (tranche de la pièce) est balayée avec un second inducteur. Une caméra infrarouge acquiert simultanément des images du rayonnement infrarouge émis par les deux zones.

L'article de LI et al. "Crack imaging by scanning laser-line thermography and laser-spot thermography" suggère de balayer la surface à analyser suivant deux directions perpendiculaires l'une à l'autre, de manière à permettre la détection de défauts ayant n'importe quelle orientation, mais ne fournit aucune indication sur la façon dont le balayage doit être organisé.

L'invention porte sur un procédé d'examen photothermique selon la revendication 1.

Ainsi, dans le procédé de l'invention, au moins deux zones de la surface de la pièce sont balayées simultanément, avec deux éléments d'apport de chaleur différents.

Par ailleurs, l'acquisition des images de rayonnement infrarouge est également accélérée, du fait de l'utilisation de deux éléments de surfaces photosensibles distincts l'un de l'autre, et qui sont donc capables de réaliser une acquisition simultanée.

Le fait que le balayage avec les premiers et seconds éléments d'apport de chaleur soit réalisé selon deux directions inclinées l'une par rapport à l'autre est particulièrement commode. En effet, il est possible au cours de la première séquence de balayer la première et la seconde zone simultanément, respectivement à l'aide du premier élément d'apport de chaleur et du second élément d'apport de chaleur, puis de déplacer les moyens permettant de créer les éléments d'apport de chaleur, de telle sorte que la seconde zone soit balayée par le premier élément d'apport de chaleur, le second élément d'apport de chaleur balayant une troisième zone. La seconde zone est ainsi balayée au cours de la première séquence selon la seconde direction, puis au cours d'une seconde séquence selon la première direction.

Le réagencement des moyens permettant de générer les deux éléments d'apport de chaleur est facile et rapide quand on passe de la première à la seconde séquence. En effet, le parcours effectué par les premiers et seconds éléments d'apport de chaleur est en général toujours le même quelle que soit la séquence, et se fait toujours selon la première direction et selon la seconde direction respectivement.

Ceci est vrai également quand les premier et second éléments d'apport de chaleur sont des lignes formant entre elles un second angle non nul, et se déplaçant sensiblement selon la même direction. La première séquence permet de balayer la seconde zone avec le second élément d'apport de chaleur, ayant une inclinaison donnée, et la seconde séquence permet de balayer la seconde zone avec le premier élément d'apport de chaleur, qui a une autre inclinaison.

Le procédé peut également présenter les caractéristiques définies dans les revendications dépendantes 2 à 7 et 11.

Selon un second aspect, l'invention porte sur un ensemble d'examen photothermique d'une pièce, selon la revendication 8.

L'ensemble peut en outre présenter les caractéristiques définies dans les revendication dépendantes 9 et 10.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est un diagramme d'étape d'un premier mode de réalisation du procédé de l'invention ;
- la figure 2 est une représentation schématique simplifiée d'un ensemble d'examen photothermique conforme à l'invention ;
- la figure 3 est une vue développée de la surface de la pièce à examiner, montrant les champs-objets pendant trois séquences de mesure successives pour le premier mode de réalisation;
- la figure 4 est une représentation schématique de la première étape de traitement du premier mode de réalisation, permettant de constituer une image finale d'une zone, à partir des images acquises ;
- la figure 5 est un diagramme d'étape d'un second mode de réalisation du procédé de l'invention ;
- la figure 6 est une vue similaire à celle de la figure 3, pour le second mode de réalisation de l'invention ;
- la figure 7 illustre la position d'un défaut de type A ; et
- les figures 8 et 9 illustrent la position d'un défaut de type B et la stratégie de traitement numérique correspondante.

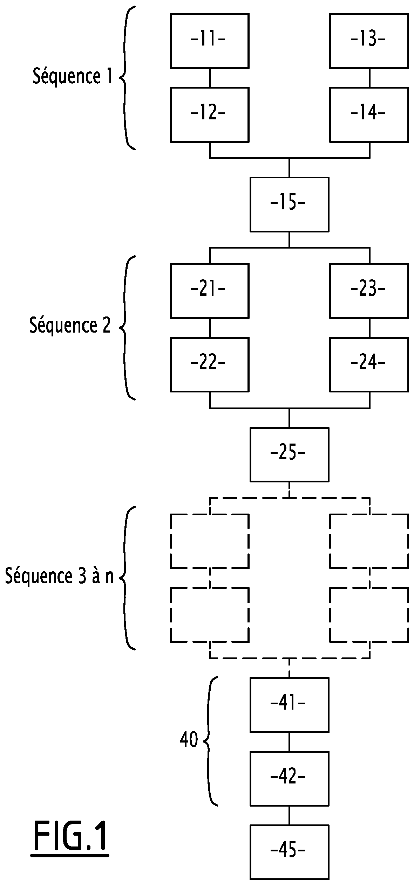

Le procédé dont les étapes sont représentées sur la figure 1 est un procédé d'examen de type photothermique actif. Le procédé est dit actif du fait que la pièce à caractériser est soumise à un chauffage. Le procédé est dit photothermique car il repose sur l'acquisition d'images infrarouges de la pièce chauffée.

Ce procédé est particulièrement adapté à la détection de défauts débouchants ou non débouchants dans des composants industriels. Il est particulièrement adapté aux pièces métalliques, notamment aux composants métalliques de centrales nucléaires.

Le procédé d'examen est destiné à réaliser l'inspection mécanisée, automatisée ou robotisée de telles pièces, en fabrication ou en maintenance.

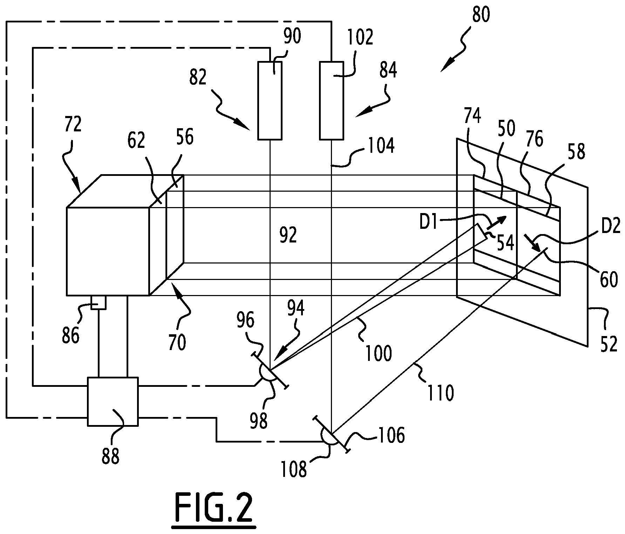

Un premier mode de réalisation est illustré sur les figures 1 et 2. Le procédé comporte au moins une première séquence ayant les étapes suivantes :
- étape 11 : balayer une première zone 50 de la surface 52 de la pièce à examiner, avec un premier élément d'apport de chaleur 54, le balayage étant réalisé selon une pluralité de lignes sensiblement parallèles à une première direction (D1 sur la figure 2) ;
- étape 12: acquérir des images du rayonnement infrarouge émis par ladite première zone 50 à l'aide d'un premier élément de surface photosensible 56 ;
- étape 13 : balayer une seconde zone 58 de la surface 52 avec un second élément d'apport de chaleur 60, le balayage étant réalisé selon une pluralité de lignes sensiblement parallèles à une seconde direction (D2 sur la figure 2) formant un angle α non nul avec la première direction ;
- étape 14 : acquérir des images du rayonnement infrarouge émis par lesdites secondes zones 58 à l'aide d'un second élément de surface photosensible 62.

Au cours de la première séquence, les première et seconde zones 50 et 58 sont balayées simultanément. L'acquisition des images du rayonnement infrarouge émises par les première et seconde zones 50, 58, à l'aide des premier et second éléments de surface photosensibles 56, 62 est également simultanée.

Le procédé comporte typiquement une ou plusieurs autres séquences similaires à la première séquence, permettant d'acquérir des images de l'ensemble de la surface de la pièce. Ces séquences supplémentaires se font avec un recouvrement, de telle sorte que chaque zone de la surface soit au cours d'une séquence balayée avec le premier élément d'apport de chaleur selon des lignes sensiblement parallèles à la première direction avec acquisition d'images par le premier élément de surface photosensible , puis, au cours d'une autre séquence, balayée par le second élément d'apport de chaleur, selon une pluralité de lignes parallèles à la seconde direction, avec acquisition d'images par le second élément de surface photosensible.

La pièce est immobile au cours de chaque séquence, en particulier par rapport aux moyens permettant l'acquisition des images du rayonnement infrarouge.

L'ordre de balayage n'a pas d'importance. Chaque zone peut d'abord être balayée par le premier élément d'apport de chaleur puis par le second, ou inversement d'abord par le second élément d'apport de chaleur puis par le premier.

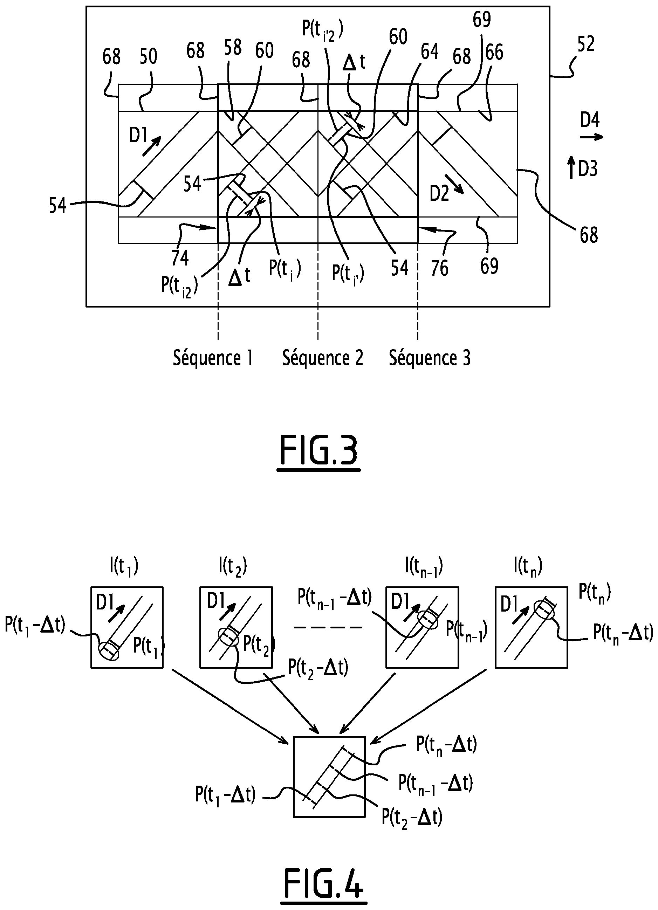

Plus précisément, le procédé comprend au moins une seconde séquence ayant les étapes suivantes, comme illustré sur les figures 1 et 3 ;
- étape 21 : balayer la seconde zone 60 de la surface 52 de la pièce avec le premier élément d'apport de chaleur 54, le balayage étant réalisé selon une pluralité de lignes sensiblement parallèles à la première direction D1 ;
- étape 22 : acquérir les images du rayonnement infrarouge émis par ladite seconde zone 60 à l'aide du premier élément de surface photosensible 56 ;
- étape 23 : balayer une troisième zone 64 de la surface 52 de la pièce avec le second élément d'apport de chaleur 60, le balayage étant réalisé selon une pluralité de lignes sensiblement parallèles à la seconde direction D2 ;
- étape 24 : acquérir les images du rayonnement émis par ladite troisième zone 64 à l'aide du second élément de surface photosensible 62.

Au cours de la seconde séquence, les seconde et troisième zones 60, 64 sont balayées simultanément. Les images du rayonnement infrarouge émis par les seconde et troisième zones sont acquises par les premier et second éléments de surface photosensibles 56, 62 de manière simultanée.

Le procédé comprend, entre la première séquence et la deuxième séquence, une étape 15 de déplacement des premier et second éléments de surface photosensibles, 56, 62 par rapport à la pièce.

Les premier et second éléments de surface photosensibles 56, 62 occupent pendant la première séquence une première position dans laquelle les premier et second éléments de surface photosensibles 56, 62 sont disposés de manière à recevoir le rayonnement infrarouge émis respectivement par la première zone 50 et par la seconde zone 58 de la surface 52. Les éléments de surface photosensibles 56, 62 sont déplacées au cours de l'étape 15 jusqu'à une seconde position, dans lesquelles les premier et second éléments de surface photosensibles 56, 62 sont disposés de manière à recevoir le rayonnement infrarouge émis respectivement par la seconde zone 58 et par la troisième zone 64.

Comme illustré sur la figure 3, le procédé comporte par exemple une troisième séquence identique à la première et à la seconde séquence, au cours de laquelle la troisième zone 64 est balayée par le premier élément d'apport de chaleur 54, avec un balayage selon une pluralité de lignes sensiblement parallèles à la première direction D1, et le premier élément de surface photosensible 56 acquière des images du rayonnement infrarouge émis par ladite troisième zone 64. Simultanément, une quatrième zone 66 de la surface 52 est balayée par le second élément d'apport de chaleur 60, selon une pluralité de lignes sensiblement parallèles à la seconde direction D2, et des images de rayonnement infrarouge émis par la quatrième zone sont acquises à l'aide de le second élément de surface photosensible 62. Entre la seconde séquence et la troisième séquence, le procédé comporte bien entendu une étape 25 de déplacement des premier et second éléments de surface photosensibles 56, 62, pour placer ces éléments de surface photosensibles 56, 62 dans des positions où ils peuvent capter respectivement le rayonnement infrarouge de la troisième zone 64 et le rayonnement infrarouge de la quatrième zone 66.

Dans l'exemple représenté sur les figures, les première et seconde zones 50, 58 de la surface 52 de la pièce, qui sont balayées simultanément, sont contigües. De même, les seconde et troisième zones 58 et 64 sont contigües. Ainsi, à chaque séquence, les zones de la surface de la pièce qui sont balayées simultanément sont contigües.

En variante, ces zones ne sont pas contigües, et sont écartées l'une de l'autre.

L'angle α entre les première et seconde directions est de préférence compris entre 45° et 135°, encore de préférence compris entre 60° et 120°. Typiquement ledit angle α est proche de ou égal à 90°. Il est choisi notamment en fonction de la courbure de la zone de la pièce qui doit être balayée.

Les premier et second éléments d'apport de chaleur 54, 60 sont obtenus à l'aide d'un laser de forme géométrique définie, d'une lampe à émission continue ou puisée, un inducteur.... En variante, les premier et second éléments d'apport de chaleur 54, 60 sont de tout autre type adapté à la fonction.

Le laser crée à la surface de la pièce un élément d'apport de chaleur qui peut avoir toute sorte de forme. Dans l'exemple représenté sur la figure 2, les premier et second éléments d'apport de chaleur 54, 60 sont des segments allongés suivant des directions perpendiculaires à la direction de déplacement de l'élément d'apport de chaleur. Typiquement, les premier et second éléments d'apport de chaleur sont dans ce cas projetés sur la surface de la pièce sous forme d'un segment. En variante, les premier et second éléments d'apport de chaleur 54, 60 sont projetés sur la surface de la pièce sous la forme d'un point, ce point étant déplacé à grande vitesse de manière à constituer un élément d'apport de chaleur ayant la forme d'un segment.

Le laser peut également créer un élément d'apport de chaleur ayant la forme d'un cercle, d'une ellipse, d'un rectangle, ou toute autre forme adaptée.

Dans un exemple de réalisation, le segment présente une longueur comprise entre 10 et 30 mm. Il présente une épaisseur comprise entre 1 à 3 mm.

Dans l'exemple de réalisation représenté sur les figures, chaque zone 50, 58, 64, 66 de la surface 52 a la forme d'un carré. Comme représenté sur la figure 3, ces zones sont délimitées par des premiers bords 68, parallèles les uns aux autres et parallèles à une troisième direction D3. Ils sont également délimités par deux bords 69, perpendiculaires aux bords 68 et s'étendant donc selon une quatrième direction D4. Les première et seconde directions D1, D2 forment dans l'exemple représenté un angle de 45° par rapport aux directions D3 et D4. En variante, les zones 50, 58, 64, 66 de la surface de la pièce n'ont pas la forme d'un carré mais ont toute autre forme. Les première et seconde directions peuvent également former un autre angle par rapport aux troisième et quatrième directions D3 et D4, différent de 45°.

Typiquement, comme visible sur la figure 2, les premier et second éléments de surface photosensibles 56, 62 sont deux parties d'une même surface photosensible 70 d'un capteur matriciel 72. Ce capteur est typiquement une caméra infrarouge numérique. En variante, les premier et second éléments de surface photosensibles 56, 62 ne font pas partie de la même surface photosensible. Ce sont par exemple les surfaces photosensibles de deux caméras infrarouges numériques linéaires distinctes l'une de l'autre et indépendantes l'une de l'autre.

A chaque séquence, le premier élément de surface photosensible 56 acquière des images du rayonnement infrarouge émis par un premier champ-objet 74 contenant une zone à inspecter. Le second élément de surface photosensible 62 acquière des images du rayonnement infrarouge émis par un second champ-objet 76 contenant une autre zone à inspecter.

Ainsi, pendant la première séquence, le premier champ-objet 74 contient la première zone 50, et le second champ-objet 76 contient la seconde zone 58. Pendant la seconde séquence, le premier champ-objet 74 contient la seconde zone 58, et le second champ-objet 76 contient la troisième zone 64.

Les premier et second champs-objets 74, 76 sont fixes pendant chaque séquence.

Dans l'exemple représenté, les champs-objets 74, 76 sont de tailles légèrement supérieures à celles des zones 50, 58, 64, 66. Ils ont ici chacun une forme rectangulaire, ayant une hauteur selon la troisième direction D3 légèrement plus grande que celle des zones 50, 58, 64, 66. En revanche, suivant la quatrième direction D4, ils ont la même largeur que les zones 50, 58, 64, 66.

En variante, les premier et second champs-objets 74, 76 ont exactement la même forme que les zones à inspecter. Selon une autre variante, les premier et second champs-objets ont toute autre forme adaptée circulaire, ovale, etc.

Pendant chaque séquence, le premier élément de surface photosensible 56 acquière des images du rayonnement infrarouge émis au moins par la totalité de la zone inspectée. Plus précisément, le premier élément de surface photosensible 56 acquière des images de rayonnement infrarouge émis par la totalité du premier champ-objet 74. En variante, le premier élément de surface photosensible 56 acquière des images du rayonnement émis seulement par une fraction de la zone inspectée.

De même, à chaque séquence, le second élément de surface photosensible 62 acquière des images de rayonnement infrarouge émis au moins par la totalité de la seconde zone 58, et typiquement émis par la totalité du second champ-objet 76. En variante, le second élément de surface photosensible 62 acquière des images seulement d'une fraction de la zone inspectée.

Comme visible sur la figure 1, le procédé comprend encore, après les différentes séquences décrites ci-dessus :
- une première étape de traitement 40, dans laquelle des première et/ou seconde images finales de chaque zone sont calculées à partir des images du rayonnement infrarouge émis par chaque zone et collectées respectivement par les premier et/ou second éléments de surface photosensibles 56, 62 pendant les différentes séquences de balayage ;
- une seconde étape de traitement 45, dans laquelle les éventuels défauts structurels dans la zone sont détectés en utilisant les première et/ou seconde images finales obtenues à la première étape de traitement 40.

Ainsi, au cours de la première étape de traitement 40, des première et/ou seconde images finales de la seconde zone 58 sont calculées respectivement à partir des images acquises par les premier et/ou second éléments de surface photosensibles 56, 62 pendant les seconde et/ou première séquences. Pour la troisième zone 64, les première et/ou seconde images finales sont calculées à partir des images collectées respectivement par les premier et/ou second éléments de surface photosensibles 56, 62 pendant les troisième et seconde séquences.

De préférence, les première et seconde images finales de chaque zone sont calculées à la première étape de traitement 40. Ceci permet une détection beaucoup plus fiable des défauts structurels au cours de la seconde étape de traitement 45. Toutefois, il est envisageable de ne calculer que la première image ou la seconde image finale, et de n'utiliser qu'une seule image finale pour déterminer la présence de défaut.

La première étape de traitement 40 va maintenant être détaillée, pour la seconde zone 58. La première étape de traitement est identique pour les autres zones de la surface 52.

On notera tout d'abord que, pendant la seconde séquence, le premier élément d'apport de chaleur 54 balaye la seconde zone 58 en occupant à une pluralité d'instants successifs ti, une pluralité de positions P(ti) successives. Le premier élément de surface photosensible 56 acquière une pluralité d'images I(ti) du rayonnement infrarouge émis par la seconde zone 58 à la pluralité d'instants ti.

De même, pendant la première séquence, le second élément d'apport de chaleur 60 balaye la seconde zone 58 en occupant à une pluralité d'instants ti' successifs une pluralité de positions P(ti') successives. Le second élément de surface photosensible 62 acquière une pluralité d'images I(ti') du rayonnement infrarouge émis par la seconde zone 58 à ladite pluralité d'instants ti'.

La première étape de traitement 40 comprend une première sous-étape 41, au cours de laquelle les opérations suivantes sont effectuées, comme illustré sur la figure 4 :
- pour chaque image I(ti) acquise pendant la seconde séquence, déterminer l'instant donné ti de la pluralité d'instants auxquels ladite image I(ti) a été acquise ;
- extraire de ladite image I(ti) une pluralité de premiers points correspondant à la position P(ti2) du premier élément d'apport de chaleur 54 à un second instant donné ti2, le second instant donné ti₂ étant égal à l'instant donné ti plus un décalage temporel ΔT prédéterminé ;
- constituer la première image finale en superposant les premiers points extraits de toutes les images I(ti) acquises pendant la seconde séquence.

La première étape de traitement 40 comporte en outre de préférence une seconde sous-étape 42, au cours de laquelle les opérations suivantes sont effectuées :
- pour chaque image I(ti') acquise pendant la première séquence, déterminer l'instant donné ti' de la pluralité d'instants auxquels ladite image I(ti') a été acquise ;
- extraire de ladite image I(ti') une pluralité de seconds points correspondant à la position du second élément d'apport de chaleur 60 à un second instant donné ti2', le second instant donné ti2' étant égal à l'instant donné ti' plus un décalage temporel ΔT' prédéterminé ;
- constituer la seconde image finale en superposant les seconds points extraits de toutes les images I(ti') acquises pendant la première séquence.

Ces opérations sont représentées schématiquement sur la figure 4, pour la constitution de la première image finale.

Pour les autres zones de la surface de la pièce, la première étape de traitement est similaire. Toutefois, ce sont les images acquises à d'autres séquences qui sont utilisées. Par exemple, pour la troisième zone 64, ce sont les images du rayonnement infrarouge émis par la troisième zone 64 pendant la troisième séquence qui sont utilisées pour constituer la première image finale. Ce sont les images acquises pendant la seconde séquence qui sont utilisées pour constituer la seconde image finale.

Le décalage temporel prédéterminé ΔT, ΔT' est constant pour le traitement de toutes les images acquises pendant une même séquence. Généralement, on choisit ΔT = ΔT'. En variante, ΔT est différent de ΔT'.

Le même décalage temporel est généralement choisi pour le traitement des images des différentes séquences.

Ce décalage peut être nul, positif ou négatif, comme expliqué dans WO 98/39640.

Du fait que les premier et second éléments d'apport de chaleur 54, 58 balayent la totalité de chaque zone, les premier et second points extraits des images 60 acquises vont également couvrir sensiblement toute la zone. On reconstitue ainsi des images finales couvrant la totalité de chaque zone.

Les premiers points extraits de chaque image acquise couvrent rigoureusement l'étendue du premier élément d'apport de chaleur 54 au second instant donné ti'2. En variante, les premiers points couvrent une étendue légèrement plus grande ou légèrement plus petite que celle du premier élément d'apport de chaleur au second instant donné ti2. De même, les seconds points couvrent rigoureusement l'étendue du second élément d'apport de chaleur 60 au second instant donné ti'2. En variante, ils couvrent une étendue légèrement plus grande ou légèrement plus petite que celle du second élément d'apport de chaleur 60.

La première étape de traitement 40 est réalisée par calcul.

Au cours de la seconde étape de traitement 45, les éventuels défauts structurels dans chaque zone sont identifiés en détectant s'il existe des concentrations de chaleur dans les première et/ou seconde images finales. En effet, en cas de défaut débouchant ou non dans la zone, l'énergie thermique apportée par le premier ou le second élément d'apport de chaleur ne peut pas se propager (totalement ou partiellement) au-delà du défaut, et s'accumule donc (en totalité ou en partiellement) sur le bord du défaut.

Cette seconde étape de traitement est réalisée par calcul, en utilisant des algorithmes de type connu.

La figure 2 représente un ensemble 80 prévu pour l'examen photothermique d'une pièce. L'ensemble 80 est prévu pour la mise en œuvre du procédé d'examen photothermique de l'invention, décrit ci-dessus.

L'ensemble 80 comprend :
- un premier dispositif de balayage 82, pour balayer la première zone 50 de la surface 52 avec le premier élément d'apport de chaleur 54, le premier dispositif de balayage 82 étant agencé pour réaliser le balayage selon une pluralité de lignes sensiblement parallèles à la première direction D1 ;
- un dispositif d'acquisition (caméra infrarouge 72 dans l'exemple représenté), comprenant le premier élément de surface photosensible 56, ce premier élément de surface photosensible 56 étant agencée pour acquérir des images du rayonnement infrarouge émis par la première zone 50 ;
- un second dispositif de balayage 84 pour balayer la seconde zone 58 de la surface 52 avec le second élément d'apport de chaleur 60, ce second dispositif de balayage 84 étant agencé pour réaliser le balayage suivant une pluralité de lignes sensiblement parallèles à la seconde direction D2 ;
- le second élément de surface photosensible 62 faisant partie du dispositif d'acquisition et étant agencée pour acquérir des images du rayonnement infrarouge émis par la seconde zone 58.

Les premier et second dispositifs de balayage 82, 84 sont agencés pour balayer simultanément les première et seconde zones. Les premier et second éléments de surface photosensibles 56, 62, comme indiqué plus haut, sont distincts l'un de l'autre. Ils sont agencés pour pouvoir acquérir simultanément des images du rayonnement infrarouge émis par les première et seconde zones 50, 58.

L'ensemble 80 comporte encore un dispositif 86 prévu pour déplacer les premier et second éléments de surface photosensibles 56, 62 par rapport à la pièce à examiner et un calculateur 88.

Le premier dispositif de balayage 82 est apte non seulement à balayer la première zone 50, mais également la seconde zone 58 et toutes les autres zones de la surface 52 avec le premier élément d'apport de chaleur 54, selon une pluralité de lignes sensiblement parallèles à la première direction D1.

Pour ce faire, il comporte, dans l'exemple représenté, une source laser 90, prévue pour émettre un faisceau laser 92, et un goniomètre 94 adapté pour réfléchir le faisceau laser 92 vers la surface 52. Le goniomètre 94 comporte une surface réfléchissante 96 et un dispositif 98 prévu pour régler l'orientation de la surface réfléchissante 96. Le dispositif 98 est piloté par le calculateur 88. En variante, le goniomètre 94 est remplacé par un miroir ou tout autre dispositif adapté.

Le faisceau laser 92 est réfléchi par la surface 96 et forme un faisceau réfléchi 100 qui crée le premier élément d'apport de chaleur 54 sur la surface 52.

Le calculateur 88 est programmé pour piloter le dispositif d'orientation 98 de manière à provoquer, pendant chaque séquence de balayage, le déplacement du premier élément d'apport de chaleur 54 selon une pluralité de lignes sensiblement parallèles à la direction D1, de manière à balayer la totalité de la zone à examiner. Le calculateur 88 est également programmé pour, entre deux séquences, modifier l'orientation de la surface 96 de telle sorte que le premier élément d'apport de chaleur soit déplacé jusqu'à la zone qui va être balayée au cours de la séquence suivante.

Le second dispositif de balayage 84 est typiquement similaire au premier. Il comporte dans l'exemple représenté une source laser 102 prévue pour émettre un faisceau laser 104, et un dispositif d'orientation 105. Le dispositif d'orientation 105 comporte une surface réfléchissante 106 et un organe d'orientation 108 permettant de modifier l'orientation de la surface réfléchissante 106. L'organe d'orientation 108 est piloté par le calculateur 88. Le faisceau laser 104 est réfléchi par l'organe réfléchissant 106 et forme un faisceau réfléchi 110 qui crée le second élément d'apport de chaleur 60 sur la surface 52. Le calculateur 88 est programmé pour, pendant chaque séquence, piloter l'organe d'orientation 108 de manière à assurer un balayage complet de la zone à examiner, selon une pluralité de lignes sensiblement parallèles à la seconde direction D2. Il est également programmé pour, entre deux séquences, déplacer le second élément d'apport de chaleur jusqu'à la zone devant être examinée à la séquence suivante.

Dans l'exemple représenté, les premier et second éléments de surface photosensibles 56, 62 sont deux zones juxtaposées de la surface photosensible matricielle 70 d'une caméra infrarouge numérique 72.

Le dispositif d'acquisition 72 est programmé pour que le premier élément de surface photosensible 56 acquière une pluralité d'images I(ti) à une pluralité d'instants ti, par exemple des images de la seconde zone 58 ou de toute autre zone.

Le dispositif d'acquisition 72 est également programmé pour que le second élément de surface photosensible 62 acquière une pluralité d'images I(ti') à une pluralité d'instants ti', par exemple des images de la seconde zone 58 ou de toute autre zone.

Le dispositif 86 est prévu pour déplacer les éléments de surface photosensibles 56, 62 par rapport à la pièce, entre les séquences.

Ainsi, pendant la première séquence, les premier et second éléments de surface photosensibles sont dans des premières positions respectives choisies de manière à recevoir le rayonnement infrarouge émis respectivement par la première zone 50 et la seconde zone 58. Pendant la deuxième séquence, les éléments de surface photosensibles 56 et 62 sont dans des secondes positions respectives leur permettant de recevoir le rayonnement infrarouge émis respectivement par la seconde zone 58 et la troisième zone. Pendant les autres séquences, les premier et second éléments de surface photosensibles 56 et 62 sont encore dans d'autres positions leur permettant de recevoir chacun le rayonnement infrarouge émis par une des zones de la surface 62. Le dispositif 86 est agencé pour déplacer le dispositif d'acquisition de manière à transférer les premier et second éléments de surface photosensibles d'une position à une autre.

Le dispositif 86 est piloté par le calculateur 88.

Le dispositif 86 est par exemple un rail ou une rotule, ou tout autre dispositif mécanique adapté.

En variante, les premier et second éléments de surface photosensibles 56 et 62 sont fixes. En revanche, le dispositif d'acquisition comporte un ou plusieurs organes mobiles adaptés pour réfléchir le rayonnement infrarouge provenant des zones de la surface 52 jusqu'aux premier et second éléments de surfaces photosensibles 56, 62. Ce dispositif de réflexion est déplacé entre chaque séquence, et agencé dans une position choisie pour réfléchir le rayonnement infrarouge des zones requises vers les premier et second éléments de surface photosensibles.

Le dispositif de réflexion est piloté par le calculateur 88.

Par ailleurs, le calculateur est programmé pour effectuer la première étape de traitement 40 et la seconde étape de traitement 45 décrites ci-dessus.

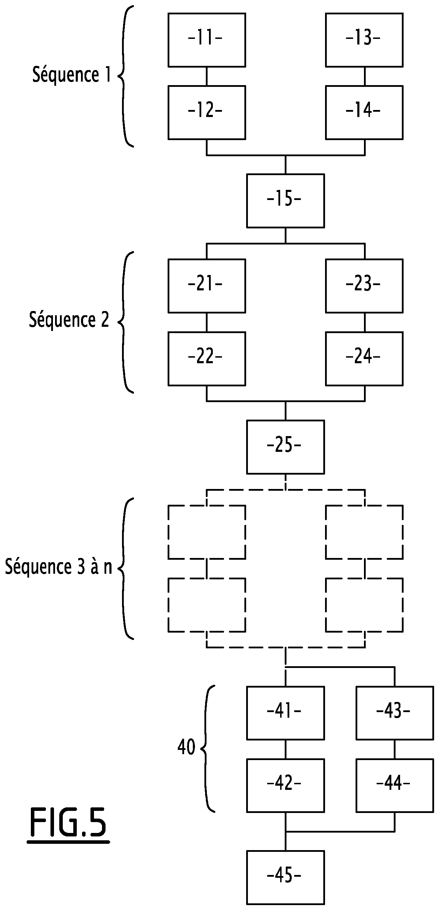

Un second mode de réalisation de l'invention va maintenant être décrit, en référence aux figures 5 à 9. Seuls les points par lesquels le second mode de réalisation diffère du premier seront détaillés ci-dessous. Les éléments identiques ou assurant la même fonction dans les deux modes de réalisation seront désignés par les mêmes références.

Dans le second mode de réalisation, les premier et second éléments d'apport de chaleur 54 et 60 sont des lignes formant entre elles un second angle β non nul.

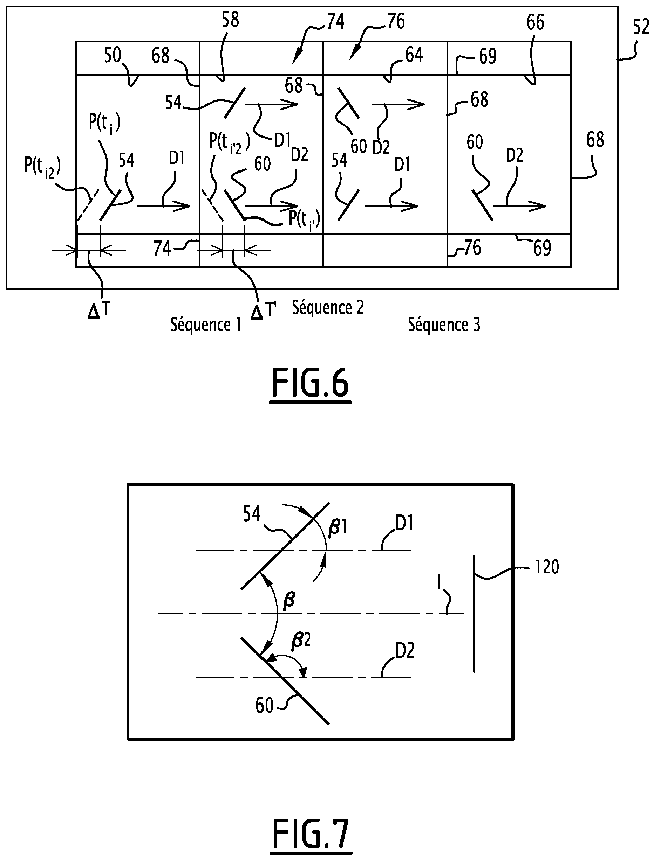

Le second angle β de préférence supérieure à 30°, encore de préférence compris entre 45° et 135°, et typiquement compris entre 60° et 120°. Typiquement la direction I médiane entre les deux lignes est parallèle (ou sensiblement parallèle) aux première et seconde directions D1 et D2 (voir figure 7).

La seconde direction D2 est sensiblement parallèle à la première direction D1, On entend par là que les première et seconde directions forment entre elles un angle inférieur à 10°, de préférence inférieur à 5°, et idéalement égal à 0 (surtout dans le cas des surfaces planes).

Comme visible sur la figure 7 par exemple, le premier élément d'apport de chaleur 54 est une ligne formant avec la première direction D1 un angle β1 compris entre 20° et 70°, de préférence compris entre 30° et 60°, et valant typiquement 45°. Le second élément d'apport de chaleur 60 est une ligne formant avec la seconde direction D2 une angle β2 compris entre 110° et 160°, de préférence compris entre 120° et 150°, et valant typiquement 135°. Les angles β, β1, et β2 sont pris ici dans le sens trigonométrique.

Le second mode de réalisation met en œuvre les mêmes séquences 1 à n de balayage et d'acquisition d'images que le premier mode de réalisation, avec les mêmes étapes dans chaque séquence. Par rapport au premier mode de réalisation, la seule différence réside dans le fait que les directions D1 et D2 sont sensiblement parallèles l'une à l'autre pour le second mode de réalisation, alors qu'elles sont inclinées l'une par rapport à l'autre dans le premier mode de réalisation. Les séquences 1 à n de balayage et d'acquisition d'images sont séparées par des étapes de déplacement 15, 25 etc., identiques à celles du premier mode de réalisation.

La première étape de traitement 40 du second mode de réalisation est en revanche différente de celle du premier mode de réalisation.

A l'étape 40, comme représenté sur la figure 5, deux traitements différents sont appliqués, sur les mêmes images.

Le premier traitement vise à identifier les défauts 120 qui sont sensiblement perpendiculaires au sens de déplacement des premier et second éléments d'apport de chaleur, c'est-à-dire aux première et seconde directions D1 et D2 (voir figure 7).

Ce premier traitement met en œuvre des première et seconde sous-étapes 41 et 42, identiques à celles qui sont mises en œuvre dans le premier mode de réalisation.

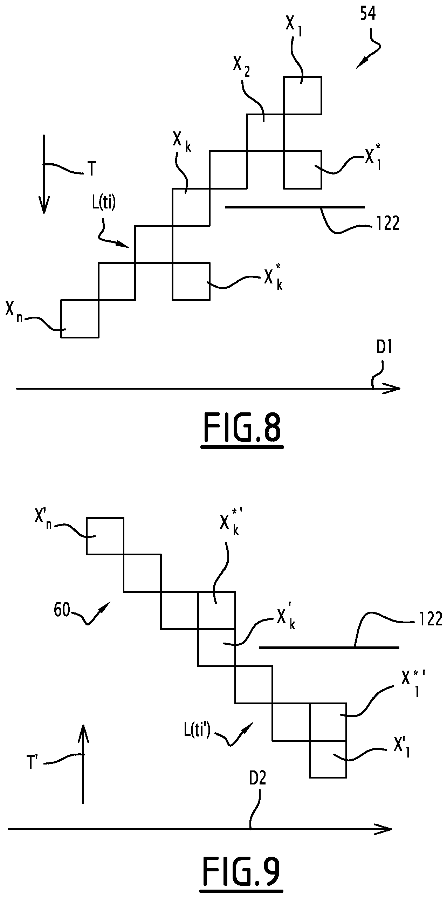

Le second traitement vise à identifier les défauts 122 qui sont sensiblement parallèles au sens de déplacement des premier et second éléments d'apport de chaleur, c'est-à-dire aux première et seconde directions D1 et D2 (voir figures 8 et 9).

Ce second traitement va être décrit ci-dessous pour la seconde zone 58. Le second traitement est identique pour les autres zones.

Comme pour le premier mode de réalisation, pendant la seconde séquence, le premier élément d'apport de chaleur 54 balaye la seconde zone 58 en occupant à une pluralité d'instants successifs ti une pluralité de positions successives P(ti). Le premier élément de surface photosensible 56 acquière une pluralité de premières images I(ti) du rayonnement infrarouge émis par la seconde zone 58 à ladite pluralité d'instants ti.

De même, pendant la première séquence, le second élément d'apport de chaleur 60 balaye la seconde zone 58 en occupant à une pluralité d'instants successifs ti' une pluralité de positions successives P(ti'). Le second élément de surface photosensible 62 acquière une pluralité de secondes images I(ti') du rayonnement infrarouge émis par la seconde zone 58 à ladite pluralité d'instants ti'.

La première étape de traitement 40 comprend une première sous-étape 43, au cours de laquelle les opérations suivantes sont effectuées.

Pour chaque première image I(ti) acquise pendant la seconde séquence, on détermine d'abord l'instant donné ti de la pluralité d'instants auquel ladite première image I(ti) a été acquise et on extrait de ladite première image I(ti) une ligne L(ti) de premiers points Xk correspondant à la position P(ti2) du premier élément d'apport de chaleur 54 à un second instant donné ti2.

Chaque point correspond typiquement à un pixel, ou à un groupe de pixels.

Le second instant donné ti2 est égal à l'instant donné ti plus un décalage temporel ΔT prédéterminé, comme expliqué en référence au premier mode de réalisation. ΔT est typiquement nul, ou négatif.

Comme visible sur la figure 8, la ligne L(ti) comprend un premier point d'extrémité amont X1 situé le plus loin suivant la première direction D1 et un premier point d'extrémité aval Xn décalé par rapport au premier point d'extrémité amont X1 à l'opposé de la première direction D1. Du fait que le premier élément d'apport de chaleur 54 est une ligne inclinée par rapport à la première direction D1, le premier point d'extrémité aval Xn est décalé aussi suivant une première direction transversale T perpendiculaire à la première direction D1.

Les autres premiers points Xk sont juxtaposés les uns à côté des autres en une ligne allant de X1 à Xn.

Chaque premier point Xk a une intensité mesurée, représentative de la température de la surface 52 de la pièce dans la zone correspondant audit point.

On établit ensuite une première ligne différentielle en affectant à chaque premier point Xk une intensité différentielle égale à l'intensité mesurée moins l'intensité d'un autre point Xk* de la première image I(t) (voir figure 8). Le point Xk* est décalé suivant la première direction transversale T par rapport audit premier point Xk et décalé suivant la première direction D1 par rapport à la ligne L(ti).

On entend ici par décalé suivant la première direction D1 par rapport à la ligne L(ti), le fait que l'autre point Xk* est sur la ligne L(ti) ou en amont de la ligne L(ti), c'est-à-dire dans une zone qui n'a pas encore été traversée par la ligne L(ti).

Le décalage entre Xk et Xk* est le même pour tous les premiers points Xk, selon la première direction et selon la première direction transversale.

Selon une première variante, l'autre point Xk* est un des premiers points Xk de la ligne L(ti). Par exemple Xk* est le point voisin de Xk du côté du point d'extrémité aval Xn. En variante, Xk* est séparé du premier point Xk par un point de la ligne, ou deux points de la ligne, ou plus de deux points de la ligne.

Selon une seconde variante, Xk* n'appartient pas à la ligne. Dans l'exemple représenté, sur la figure 8, Xk* est décalé de zéro pixel selon la première direction D1 et de deux pixels selon la première direction transversale T.

Xk* est typiquement décalé par rapport à Xk d'un nombre de pixel strictement positif selon la première direction transversale, notamment pour rester en amont de la ligne L(ti). En variante, Xk* est décalé par rapport à Xk d'un nombre de pixels strictement négatif selon la première direction transversale, pour rester en aval de la ligne L(ti).

Ensuite, on constitue la première image finale, en superposant les premières lignes différentielles établies pour toutes les premières images I(ti) acquises pendant la seconde séquence.

Les mêmes opérations sont effectuées de préférence pour les secondes images.

Pour chaque seconde image I(ti') acquise pendant la première séquence, on détermine l'instant donné ti' de la pluralité d'instants auquel ladite seconde image I(ti') a été acquise et on extraire de ladite seconde image I(ti') une ligne de seconds points L(ti') correspondant à la position P(ti2') du second élément d'apport de chaleur 60 à un second instant donné ti2'.

Chaque point correspond typiquement à un pixel, ou à un groupe de pixels.

Le second instant donné ti2' est égal à l'instant donné ti' plus un décalage temporel ΔT' prédéterminé, comme expliqué en référence au premier mode de réalisation. ΔT' est typiquement nul, ou négatif.

Comme visible sur la figure 9, la ligne comprenant un second point d'extrémité amont X1' situé le plus loin suivant la seconde direction D2 et un second point d'extrémité aval Xn' décalé par rapport au premier point d'extrémité amont X1' à l'opposé de la seconde direction D2. Du fait que le second élément d'apport de chaleur 60 est une ligne inclinée par rapport à la seconde direction D2, le second point d'extrémité aval Xn' est décalé par rapport au second point d'extrémité amont X1' suivant une seconde direction transversale T' perpendiculaire à la seconde direction D2, qui est sur la figure 9 la direction T' opposée à la première direction transversale T.

Les autres seconds points Xk' sont juxtaposés les uns à côté des autres en une ligne allant de X1' à Xn'.

Chaque second point Xk' a une intensité mesurée, représentative de la température de la surface de la pièce 52 dans la zone correspondant audit second point Xk'.

On établit ensuite une seconde ligne différentielle en affectant à chaque second point Xk' une intensité différentielle égale à l'intensité mesurée moins l'intensité d'un autre point Xk*' de la seconde image I(ti') (voir figure 9). L'autre point Xk*' est décalé suivant la seconde direction transversale T' par rapport audit second point Xk' et est décalé suivant la seconde direction D2 par rapport à la ligne L(ti').

On entend ici par décalé suivant la seconde direction par rapport à la ligne L(ti'), le fait que l'autre point Xk*' est sur la ligne L(ti') ou en amont de la ligne L(ti'), c'est-à-dire dans une zone qui n'a pas encore été traversée par la ligne L(ti').

Le décalage entre Xk et Xk*' est le même pour tous les seconds points Xk', selon la seconde direction D2 et selon la seconde direction transversale T'.

Selon une première variante, l'autre point Xk*' est un des seconds points Xk' de la ligne L(ti'). Par exemple Xk*' est le point voisin de Xk' du côté du point d'extrémité aval Xn'. En variante, Xk*' est séparé du premier point Xk' par un point de la ligne, ou deux points de la ligne, ou plus de deux points de la ligne.

Selon une seconde variante, Xk*' n'appartient pas à la ligne. Dans l'exemple représenté, sur la figure 9, Xk*' est décalé de zéro pixel selon la première direction D2 et de un pixel selon la seconde direction transversale T'.

Xk*' est décalé par rapport à Xk' d'un nombre de pixel strictement positif selon la seconde direction transversale, notamment pour rester en amont de la ligne L(ti'). En variante, Xk*' est décalé par rapport à Xk' d'un nombre de pixels strictement négatif selon la seconde direction transversale, pour rester en aval de la ligne L(ti').

Ensuite, on constitue la seconde image finale en superposant les secondes lignes différentielles établies pour toutes les secondes images I(ti') acquises pendant la première séquence.

Dans une variante non préférée, les opérations décrites ci-dessus sont effectuées seulement pour les premières images, ou seulement pour les secondes images.

Au cours de la seconde étape de traitement 45, les éventuels défauts structurels sensiblement perpendiculaires aux première et seconde directions D1 et D2 sont identifiés en examinant les images finales obtenues à l'aide du premier traitement (sous-étapes 41, 42). Les défauts sont identifiés en détectant s'il existe des concentrations de chaleur dans les première et/ou seconde images finales. En effet, en cas de défaut débouchant ou non dans la zone, l'énergie thermique apportée par le premier ou le second élément d'apport de chaleur ne peut pas se propager (totalement ou partiellement) au-delà du défaut, et s'accumule donc (en totalité ou en partiellement) sur le bord du défaut.

Au cours de la seconde étape de traitement 45, les éventuels défauts structurels sensiblement parallèles aux première et seconde directions D1 et D2 sont identifiés en examinant les images finales obtenues à l'aide du second traitement (sous-étapes 43, 44). Ces images montrent les gradients de températures selon une direction sensiblement perpendiculaire à la direction de déplacement. Si un défaut parallèle à la direction de déplacement est présent, du fait de l'inclinaison des lignes formées par les éléments d'apport de chaleur, la chaleur va plus s'accumuler sur un bord du défaut que sur le bord opposé. Dans l'exemple de la figure 8, la chaleur s'accumulera en premier sur le bord du défaut 122 situé vers le haut de la figure 8, du fait de l'angle fermé entre ce bord et la ligne constituée par l'élément d'apport de chaleur. Au contraire, la chaleur s'accumulera en dernier sur le bord situé vers le bas de la figure 8, du fait de l'angle plus ouvert entre ce bord et la ligne constituée par l'élément d'apport de chaleur. La situation est inverse sur la figure 9. Il se crée ainsi un gradient de température à l'instant t perpendiculairement à la direction de déplacement, de part et d'autre du défaut.

Les défauts structurels, par exemple les fissures, qui ne sont ni parallèles ni perpendiculaires aux première et seconde directions D1 et D2 seront détectées sur les images finales issues du premier traitement ou du second traitement, en fonction de leur orientation.

Les première et seconde étapes de traitement sont réalisées par calcul, en utilisant des algorithmes de type connu.

Le second mode de réalisation est mis en œuvre avec le même ensemble d'examen photothermique que le premier mode de réalisation, seule la programmation du calculateur 88 étant modifiée. Le calculateur est programmé pour mettre en œuvre le procédé selon le second mode de réalisation.

Il est à noter que les deux modes de réalisation de l'invention ont été décrits comme étant mis en œuvre avec un capteur matriciel 72 fixe pendant chaque séquence de balayage et d'acquisition d'images. En variante, les deux modes de réalisation de l'invention sont mis en œuvre avec un ou deux capteurs mobiles, qui scanne(nt) la surface à examiner en même temps que les éléments d'apport de chaleur.

## Revendications

1. Procédé d'examen photothermique d'une pièce, le procédé comprenant une première séquence ayant les étapes suivantes :
- étape 11 : balayer une première zone (50) d'une surface (52) de la pièce avec un premier élément d'apport de chaleur (54), le balayage étant réalisé selon une pluralité de lignes sensiblement parallèles à une première direction (D1) ;
- étape 12: acquérir une image du rayonnement infrarouge émis par ladite première zone (50) à l'aide d'un premier élément de surface photosensible (56) ;
le procédé comprend en outre les étapes suivantes :
- étape 13 : balayer une seconde zone (58) de la surface (52) de la pièce avec un second élément d'apport de chaleur (60), le balayage étant réalisé selon une pluralité de lignes sensiblement parallèles à une seconde direction (D2);
- étape 14: acquérir une image du rayonnement infrarouge émis par ladite seconde zone (60) à l'aide d'un second élément de surface photosensible (62) ;
le procédé comprenant en outre au moins une seconde séquence ayant les étapes suivantes :
- étape 21 : balayer la seconde zone (58) de la surface (52) de la pièce avec le premier élément d'apport de chaleur (54), le balayage étant réalisé selon une pluralité de lignes sensiblement parallèles à la première direction (D1) ;
- étape 22 : acquérir une image du rayonnement infrarouge émis par ladite seconde zone (58) à l'aide du premier élément de surface photosensible (56) ;
- étape 23 : balayer une troisième zone (64) de la surface (52) de la pièce avec le second élément d'apport de chaleur (60), le balayage étant réalisé selon une pluralité de lignes sensiblement parallèles à la seconde direction (D2) ;
- étape 24 : acquérir une image du rayonnement infrarouge émis par ladite troisième zone (64) à l'aide du second élément de surface photosensible (62) ;
chaque zone de la surface (52) de la pièce étant balayée au cours d'une séquence avec le premier élément d'apport de chaleur (54) selon une pluralité de lignes parallèles à la première direction (D1), et au cours d'une autre séquence avec le second élément d'apport de chaleur (60) selon une pluralité de lignes parallèles à la seconde direction (D2), des images du rayonnement infrarouge émis par ladite zone étant acquises par le premier élément de surface photosensible (56) pendant ladite séquence et par le second élément de surface photosensible (62) pendant ladite autre séquence ;
la seconde direction (D2) forme un premier angle (α) non nul avec la première direction (D1), ledit premier angle (a) étant de préférence supérieur à 30° ;
les premier et second éléments d'apport de chaleur (54, 60) étant générés par un laser de forme géométrique définie ;
les première et seconde zones (50, 58)sont balayées simultanément ;
les seconde et troisième zones étant balayées simultanément ;
les première et seconde surfaces photosensibles (56, 62) étant distinctes l'une de l'autre.

2. Procédé selon la revendication 1, **caractérisé en ce que** les premier et second éléments de surface photosensibles (56, 62) sont deux parties d'une surface photosensible (70) d'un capteur matriciel (72).

3. Procédé selon la revendication 1 ou 2, **caractérisé en ce qu'**il comprend une étape (15) de déplacement des premier et second éléments de surface photosensibles (56, 62) par rapport à la pièce entre la première séquence et la seconde séquence.

4. Procédé selon l'une quelconque des revendications 1 à 3, **caractérisé en ce qu'**il comprend, après les première et seconde séquences :
- une première étape de traitement (40), dans laquelle des première et/ou seconde images finales de la seconde zone (58) sont calculées respectivement à partir des images du rayonnement infrarouge émis par ladite seconde zone (58) et collectées respectivement par les premier et/ou second éléments de surface photosensibles (56, 62) respectivement pendant les seconde et/ou première séquences ;
- une seconde étape de traitement (45), dans laquelle les éventuels défauts structurels dans la seconde zone (58) sont détectés en utilisant les première et/ou seconde images finales obtenues à la première étape de traitement (40).

5. Procédé selon la revendication 4, **caractérisé en ce que** :
a) pendant la seconde séquence, le premier élément d'apport de chaleur (54) balaye la seconde zone (58) en occupant à une pluralité d'instants successifs, ti, une pluralité de positions successives, P(ti), et le premier élément de surface photosensible (56) acquière une pluralité d'images, I(ti), du rayonnement infrarouge émis par la seconde zone (58) à ladite pluralité d'instants, ti ; et/ou
b) pendant la première séquence, le second élément d'apport de chaleur (60) balaye la seconde zone (58) en occupant à une pluralité d'instants successifs, ti', une pluralité de positions successives, P(ti'), et le second élément de surface photosensible (62) acquière une pluralité d'images, I(ti'), du rayonnement infrarouge émis par la seconde zone (58) à ladite pluralité d'instants, ti' ; et **en ce que** la première étape de traitement (40) comprend les opérations suivantes :
c) pour chaque image, I(ti), acquise pendant la seconde séquence, déterminer l'instant donné, ti, de la pluralité d'instants auquel ladite image, I(ti), a été acquise et extraire de ladite image, I(ti), une pluralité de premiers points correspondant à la position, P(ti2), du premier élément d'apport de chaleur (54) à un second instant donné, ti2, le second instant donné, ti2, étant égal à l'instant donne, ti, plus un décalage temporel, ΔT, prédéterminé ; constituer la première image finale en superposant les premiers points extraits de toutes les images, I(ti), acquises pendant la seconde séquence ; et/ou
d/ pour chaque image acquise, I(ti'), pendant la première séquence, déterminer l'instant donné, ti', de la pluralité d'instants auquel ladite image, I(ti'), a été acquise, et extraire de ladite image, I(ti'), une pluralité de seconds points correspondant à la position du second élément d'apport de chaleur (60) à un second instant donné, ti2', le second instant donné, ti2', étant égal à l'instant donné, ti', plus un décalage temporel prédéterminé, ΔT'; constituer la seconde image finale en superposant les seconds points extraits de toutes les images acquises, I(ti'), pendant la première séquence.

6. Procédé selon l'une quelconque des revendications précédentes, **caractérisé en ce que**, pendant la première séquence, le premier élément de surface photosensible (56) acquière des images du rayonnement infrarouge émis par un premier champ objet (74) contenant la première zone (50), et le second élément de surface photosensible (62) acquière des images du rayonnement infrarouge émis par un second champ objet (76) contenant la seconde zone (58), les premier et second champs objets (74, 76) étant fixes pendant la première séquence.

7. Procédé selon la revendication 6, **caractérisé en ce que** pendant la première séquence, le premier élément de surface photosensible (56) acquière des images du rayonnement infrarouge émis au moins par la totalité de la première zone (50), et le second élément de surface photosensible (62) acquière des images du rayonnement infrarouge émis au moins par la totalité de la seconde zone (58).

8. Ensemble d'examen photothermique d'une pièce, ledit ensemble (80) comprenant :
- un premier dispositif de balayage (82) pour balayer une première zone (50) d'une surface (52) de la pièce avec un premier élément d'apport de chaleur (54), agencé pour réaliser le balayage selon une pluralité de lignes sensiblement parallèles à une première direction (D1) ;
- un dispositif d'acquisition (72) comprenant un premier élément de surface photosensible (56) agencée pour acquérir des images du rayonnement infrarouge émis par ladite première zone (50) ;
- un second dispositif de balayage (84) pour balayer une seconde zone (58) de la surface (52) de la pièce avec un second élément d'apport de chaleur (60), agencé pour réaliser le balayage selon une pluralité de lignes sensiblement parallèles à une seconde direction (D2);
- le dispositif d'acquisition (72) ayant un second élément de surface photosensible (62) agencée pour acquérir des images du rayonnement infrarouge émis par ladite seconde zone (58) ;
- le premier dispositif de balayage (82) est apte à balayer la seconde zone (58) de la surface (52) de la pièce avec le premier élément d'apport de chaleur (54), et à réaliser le balayage selon une pluralité de lignes sensiblement parallèles à la première direction (D1) ;
- le premier élément de surface photosensible (56) est apte à acquérir des images du rayonnement infrarouge émis par ladite seconde zone (58) ;
- le second dispositif de balayage (84) est apte à balayer une troisième zone (64) de la surface (52) de la pièce avec le second élément d'apport de chaleur (60), et à réaliser le balayage selon une pluralité de lignes sensiblement parallèles à la seconde direction (D2) ;
- le second élément de surface photosensible (62) est apte à acquérir des images du rayonnement infrarouge émis par ladite troisième zone (64) ;
chaque zone de la surface (52) de la pièce est balayée au cours d'une séquence avec le premier élément d'apport de chaleur (54) selon une pluralité de lignes parallèles à la première direction (D1), et au cours d'une autre séquence avec le second élément d'apport de chaleur (60) selon une pluralité de lignes parallèles à la seconde direction (D2), des images du rayonnement infrarouge émis par ladite zone étant acquises par le premier élément de surface photosensible (56) pendant ladite séquence et par le second élément de surface photosensible (62) pendant ladite autre séquence ;
la seconde direction (D2) forme un premier angle (α) non nul avec la première direction (D1), ledit premier angle (a) étant de préférence supérieur à 30°,
les premier et second éléments d'apport de chaleur (54, 60) étant générés par un laser de forme géométrique définie ;
les premier et second dispositifs de balayage (82, 84) sont agencés pour balayer simultanément les première et seconde zones (50, 58),;
les premier et second dispositifs de balayage (82, 84) étant agencés pour balayer les seconde et troisième zones (58, 64) simultanément ;
les premier et second éléments de surface photosensibles (56, 62) étant distincts l'une de l'autre.

9. Ensemble selon la revendication 8, **caractérisé en ce qu'**il comprend un calculateur (88) programmé pour effectuer:
- une première étape de traitement (40) , dans laquelle des première et/ou seconde images finales de la seconde zone (58) sont calculées respectivement à partir des images du rayonnement infrarouge émis par ladite seconde zone (58) et collectées respectivement par les premier et/ou second éléments de surface photosensibles (56, 62) respectivement pendant les première et/ou seconde séquences ;
- une seconde étape de traitement (45), dans laquelle les éventuels défauts structurels dans la seconde zone (58) sont détectés en utilisant les première et/ou seconde images finales obtenues à la première étape de traitement (45).

10. Ensemble selon la revendication 9, **caractérisé en ce que**
a) le premier dispositif de balayage (82) est agencé pour que le premier élément d'apport de chaleur (54) balaye la seconde zone (58) en occupant à une pluralité d'instants successifs, ti, une pluralité de positions successives, P(ti), et le dispositif d'acquisition (72) est programmé pour que le premier élément de surface photosensible (56) acquière une pluralité d'images, I(ti), du rayonnement infrarouge émis par la seconde zone (58) à ladite pluralité d'instants, ti ; et/ou
b) le second dispositif de balayage (84) est agencé pour que le second élément d'apport de chaleur (60) balaye la seconde zone (58) en occupant à une pluralité d'instants successifs, ti', une pluralité de positions successives, Pti', et le dispositif d'acquisition (72) est programmé pour que le second élément de surface photosensible (62) acquière une pluralité d'images, I(ti'), du rayonnement infrarouge émis par la seconde zone (58) à ladite pluralité d'instants, ti'; le calculateur (88) étant programmé pour effectuer les opérations suivantes pendant la première étape de traitement (40) :
c) pour chaque image, I(ti), acquise par le premier élément de surface photosensible (56), déterminer l'instant, ti, donné de la pluralité d'instants auquel ladite image, I(ti), a été acquise, et extraire de ladite image, I(ti), une pluralité de premiers points correspondant à la position du premier élément d'apport de chaleur (54) à un second instant donné, ti2, le second instant donné, ti2, étant égal à l'instant donné, ti, plus un décalage temporel, ΔT, prédéterminé ; constituer la première image finale en superposant les premiers points extraits de toutes les images, I(ti), acquises par le premier élément de surface photosensible (56) ; et/ou
d) pour chaque image acquise, I(ti'), par le second élément de surface photosensible (62), déterminer l'instant donné, ti', de la pluralité d'instants auquel ladite image, I(ti'), a été acquise, et extraire de ladite image, I(ti'), une pluralité de seconds points correspondant à la position du second élément d'apport de chaleur (60) à un second instant donné, ti2', le second instant donné, ti2', étant égal à l'instant donné, ti', plus un décalage temporel, ΔT', prédéterminé ; constituer la seconde image finale en superposant les seconds points extraits de toutes les images acquises, I(ti'), par le second élément de surface photosensible (62).

11. Procédé selon l'une quelconque des revendications 1 à 7, **caractérisé en ce que** la pièce est immobile au cours de chaque séquence.

## Patentansprüche

1. Verfahren zur photothermischen Untersuchung eines Werkstücks, das Verfahren umfassend eine erste Sequenz, die folgenden Schritten aufweist:
- Schritt 11: Abtasten eines ersten Bereichs (50) einer Oberfläche (52) des Werkstücks mit einem ersten Wärmezufuhrelement (54), wobei das Abtasten entlang einer Vielzahl von Linien erfolgt, die im Wesentlichen parallel zu einer ersten Richtung (D1) sind;
- Schritt 12: Aufnehmen eines Bilds der von dem ersten Bereich (50) emittierten Infrarotstrahlung mittels eines ersten lichtempfindlichen Oberflächenelements (56);
das Verfahren ferner umfassend die folgenden Schritte:
- Schritt 13: Abtasten eines zweiten Bereichs (58) der Oberfläche (52) des Werkstücks mit einem zweiten Wärmezufuhrelement (60), wobei das Abtasten entlang einer Vielzahl von Linien erfolgt, die im Wesentlichen parallel zu einer zweiten Richtung (D2) sind;
- Schritt 14: Aufnehmen eines Bilds der von dem zweiten Bereich (60) emittierten Infrarotstrahlung mittels eines zweiten lichtempfindlichen Oberflächenelements (62);
das Verfahren ferner umfassend mindestens eine zweite Sequenz, die folgenden Schritte aufweist:
- Schritt 21: Abtasten des zweiten Bereichs (58) der Oberfläche (52) des Werkstücks mit dem ersten Wärmezufuhrelement (54), wobei das Abtasten entlang einer Vielzahl von Linien erfolgt, die im Wesentlichen parallel zu der ersten Richtung (D1) sind;
- Schritt 22: Aufnehmen eines Bilds der von dem zweiten Bereich (58) emittierten Infrarotstrahlung mittels des ersten lichtempfindlichen Oberflächenelements (56);
- Schritt 23: Abtasten eines dritten Bereichs (64) der Oberfläche (52) des Werkstücks mit dem zweiten Wärmezufuhrelement (60), wobei das Abtasten entlang einer Vielzahl von Linien erfolgt, die im Wesentlichen parallel zu der zweiten Richtung (D2) sind;
- Schritt 24: Aufnehmen eines Bilds der von dem dritten Bereich (64) emittierten Infrarotstrahlung mittels des zweiten lichtempfindlichen Oberflächenelements (62);
wobei jeder Bereich der Oberfläche (52) des Werkstücks in einer Sequenz mit dem ersten Wärmezufuhrelement (54) entlang einer Vielzahl von Linien parallel zur ersten Richtung (D1) und in einer anderen Sequenz mit dem zweiten Wärmezufuhrelement (60) entlang einer Vielzahl von Linien parallel zur zweiten Richtung (D2) abgetastet wird, wobei Bilder der von dem Bereich emittierten Infrarotstrahlung von dem ersten lichtempfindlichen Oberflächenelement (56) während der einen Sequenz und von dem zweiten lichtempfindlichen Oberflächenelement (62) während der anderen Sequenz aufgenommen werden;
die zweite Richtung (D2) einen ersten Winkel (a) ungleich Null mit der ersten Richtung (D1) bildet, wobei der erste Winkel (a) vorzugsweise größer als 30° ist;
wobei das erste und das zweite Wärmezufuhrelement (54, 60) durch einen Laser mit einer definierten geometrischen Form erzeugt werden;
der erste und der zweite Bereich (50, 58) gleichzeitig abgetastet werden;
wobei der zweite und der dritte Bereich gleichzeitig abgetastet werden;
die erste und die zweite lichtempfindliche Oberfläche (56, 62) voneinander getrennt sind.

2. Verfahren nach Anspruch 1, **dadurch gekennzeichnet, dass** das erste und das zweite lichtempfindliche Oberflächenelement (56, 62) zwei Teile einer lichtempfindlichen Oberfläche (70) eines Matrixsensors (72) sind.

3. Verfahren nach Anspruch 1 oder 2, **dadurch gekennzeichnet, dass** es einen Schritt (15) eines Bewegens des ersten und des zweiten lichtempfindlichen Oberflächenelements (56, 62) zwischen der ersten Sequenz und der zweiten Sequenz in Bezug auf das Werkstück umfasst.

4. Verfahren nach einem der Ansprüche 1 bis 3, **dadurch gekennzeichnet, dass** es nach der ersten und der zweiten Sequenz Folgendes umfasst:
- einen ersten Verarbeitungsschritt (40), in dem ein erstes und/oder ein zweites endgültiges Bild des zweiten Bereichs (58) jeweils aus den Bildern der Infrarotstrahlung berechnet wird, die von dem zweiten Bereich (58) emittiert wird und jeweils von dem ersten und/oder dem zweiten lichtempfindlichen Oberflächenelement (56, 62) jeweils während der zweiten und/oder der ersten Sequenz gesammelt wird;
- einen zweiten Verarbeitungsschritt (45), in den möglichen strukturellen Defekte in dem zweiten Bereich (58) unter Verwendung des ersten und/oder des zweiten endgültigen Bilds, das in dem ersten Verarbeitungsschritt (40) erlangt wird, erkannt werden.

5. Verfahren nach Anspruch 4, **dadurch gekennzeichnet, dass**:
a) während der zweiten Sequenz das erste Wärmezufuhrelement (54) den zweiten Bereich (58) abtastet, indem es zu einer Vielzahl von aufeinanderfolgenden Zeitpunkten, ti, eine Vielzahl von aufeinanderfolgenden Positionen, P(ti), einnimmt, und das erste lichtempfindliche Oberflächenelement (56) eine Vielzahl von Bildern, I(ti), der von dem zweiten Bereich (58) zu der Vielzahl von Zeitpunkten, ti, emittierten Infrarotstrahlung aufnimmt; und/oder
b) während der ersten Sequenz das zweite Wärmezufuhrelement (60) den zweiten Bereich (58) abtastet, indem es zu einer Vielzahl von aufeinanderfolgenden Zeitpunkten, ti', eine Vielzahl von aufeinanderfolgenden Positionen, P(ti'), einnimmt, und das zweite photoempfindliche Oberflächenelement (62) eine Vielzahl von Bildern I(ti') der Infrarotstrahlung aufnimmt, die von dem zweiten Bereich (58) zu der Vielzahl von Zeitpunkten, ti', emittiert wird; und dadurch, dass der erste Verarbeitungsschritt (40) die folgenden Schritte umfasst:
c) für jedes Bild, I(ti), das während der zweiten Sequenz aufgenommen wird, Bestimmen des gegebenen Zeitpunkts, ti, aus der Vielzahl von Zeitpunkten, zu dem das Bild (ti) aufgenommen wurde, und Extrahieren einer Vielzahl von ersten Punkten aus dem Bild, I(ti), die der Position P(ti2), des ersten Wärmezufuhrelements (54) zu einem zweiten gegebenen Zeitpunkt, ti2, entsprechen, wobei der zweite gegebene Zeitpunkt, ti2, (gleich wie der gegebene Zeitpunkt, ti, plus einer vorbestimmten Zeitverschiebung, ΔT); Erstellen des ersten endgültigen Bilds durch Überlagern der ersten Punkte, die aus allen Bildern, I(ti), extrahiert werden, die während der zweiten Sequenz aufgenommen werden; und/oder
d) für jedes aufgenommene Bild, I(ti'), während der ersten Sequenz, Bestimmen des gegebenen Zeitpunkts, ti', aus der Vielzahl von Zeitpunkten, zu dem das Bild I(ti'), aufgenommen wirde, und Extrahieren einer Vielzahl von zweiten Punkten aus dem Bild, (ti'), die der Position des zweiten Wärmezufuhrelements (60) zu einem zweiten gegebenen Zeitpunkt, ti2', entsprechen, wobei der zweite gegebene Zeitpunkt, ti2', gleich wie der gegebene Zeitpunkt, ti', plus einer vorbestimmten Zeitverschiebung, ΔT', ist; Erstellen des zweiten endgültigen Bilds durch Überlagern der zweiten Punkte, die aus allen während der ersten Sequenz aufgenommenen Bildern I(ti') extrahiert werden.

6. Verfahren nach einem der vorherigen Ansprüche, **dadurch gekennzeichnet, dass** während der ersten Sequenz das erste lichtempfindliche Flächenelement (56) Bilder der Infrarotstrahlung aufnimmt, die von einem ersten Objektfeld (74) emittiert wird, das den ersten Bereich (50) enthält, und das zweite lichtempfindliche Flächenelement (62) Bilder der Infrarotstrahlung erfasst, die von einem zweiten Objektfeld (76) emittiert wird, das den zweiten Bereich (58) enthält, wobei das erste und das zweite Objektfeld (74, 76) während der ersten Sequenz fest sind.

7. Verfahren nach Anspruch 6, **dadurch gekennzeichnet, dass** während der ersten Sequenz das erste lichtempfindliche Flächenelement (56) Bilder der Infrarotstrahlung aufnimmt, die mindestens von der Gesamtheit des ersten Bereichs (50) emittiert wird, und das zweite lichtempfindliche Flächenelement (62) Bilder der Infrarotstrahlung aufnimmt, die mindestens von der Gesamtheit des zweiten Bereichs (58) emittiert wird.

8. Einheit zur photothermischen Untersuchung eines Werkstücks, die Einheit (80) umfassend:
- eine erste Abtastvorrichtung (82) zum Abtasten eines ersten Bereichs (50) einer Oberfläche (52) des Werkstücks mit einem ersten Wärmezufuhrelement (54), die angeordnet ist, um das Abtasten entlang einer Vielzahl von Linien durchzuführen, die im Wesentlichen parallel zu einer ersten Richtung (D1) sind;
- eine Aufnahmevorrichtung (72) umfassend ein erstes lichtempfindliches Oberflächenelement (56), das angeordnet ist, um Bilder der von dem ersten Bereich (50) emittierten Infrarotstrahlung aufzunehmen;
- eine zweite Abtastvorrichtung (84) zum Abtasten eines zweiten Bereichs (58) der Oberfläche (52) des Werkstücks mit einem zweiten Wärmezufuhrelement (60), die angeordnet ist, um das Abtasten entlang einer Vielzahl von Linien durchzuführen, die im Wesentlichen parallel zu einer zweiten Richtung (D2) sind;
- wobei die Aufnahmevorrichtung (72) ein zweites lichtempfindliches Oberflächenelement (62) aufweist, das angeordnet ist, um Bilder der von dem zweiten Bereich (58) emittierten Infrarotstrahlung aufzunehmen;
- die erste Abtastvorrichtung (82) angepasst ist, um den zweiten Bereich (58) der Oberfläche (52) des Werkstücks mit dem ersten Wärmezufuhrelement (54) abzutasten und das Abtasten entlang einer Vielzahl von Linien durchzuführen, die im Wesentlichen parallel zu der ersten Richtung (D1) sind;
- das erste lichtempfindliche Oberflächenelement (56) angepasst ist, um Bilder der Infrarotstrahlung aufzunehmen, die von dem zweiten Bereich (58) emittiert wird;
- die zweite Abtastvorrichtung (84) angepasst ist, um einen dritten Bereich (64) der Oberfläche (52) des Werkstücks mit dem zweiten Wärmezufuhrelement (60) abzutasten und das Abtasten entlang einer Vielzahl von Linien durchzuführen, die im Wesentlichen parallel zu der zweiten Richtung (D2) sind;
- das zweite lichtempfindliche Oberflächenelement (62) geeignet ist, um Bilder der Infrarotstrahlung zu erfassen, die von dem dritten Bereich (64) emittiert wird;
wobei jeder Bereich der Oberfläche (52) des Werkstücks in einer Sequenz mit dem ersten Wärmezufuhrelement (54) entlang einer Vielzahl von Linien parallel zur ersten Richtung (D1) und in einer anderen Sequenz mit dem zweiten Wärmezufuhrelement (60) entlang einer Vielzahl von Linien parallel zur zweiten Richtung (D2) abgetastet wird, wobei Bilder der von dem Bereich emittierten Infrarotstrahlung von dem ersten lichtempfindlichen Oberflächenelement (56) während der einen Sequenz und von dem zweiten lichtempfindlichen Oberflächenelement (62) während der anderen Sequenz aufgenommen werden;
die zweite Richtung (D2) einen ersten Winkel (α) ungleich Null mit der ersten Richtung (D1) bildet, wobei der erste Winkel (α) vorzugsweise größer als 30° ist;
wobei das erste und das zweite Wärmezufuhrelement (54, 60) durch einen Laser mit einer definierten geometrischen Form erzeugt werden;
die erste und die zweite Abtastvorrichtung (82, 84) angeordnet sind, um gleichzeitig den ersten und den zweiten Bereich (50, 58) abzutasten;
wobei die erste und die zweite Abtastvorrichtung (82, 84) angeordnet sind, um den zweiten und den dritten Bereich (58, 64) gleichzeitig abzutasten;
wobei das erste und das zweite lichtempfindliche Oberflächenelement (56, 62) voneinander verschieden sind.

9. Einheit nach Anspruch 8, **dadurch gekennzeichnet, dass** sie einen Rechner (88) umfasst, der programmiert ist, um Folgendes auszuführen:
- einen ersten Verarbeitungsschritt (40), in dem ein erstes und/oder ein zweites endgültiges Bild des zweiten Bereichs (58) jeweils aus den Bildern der Infrarotstrahlung berechnet wird, die von dem zweiten Bereich (58) emittiert wird und jeweils von dem ersten und/oder dem zweiten lichtempfindlichen Oberflächenelement (56, 62) jeweils während der ersten und/oder der zweiten Sequenz gesammelt wird;
- einen zweiten Verarbeitungsschritt (45), in den möglichen strukturellen Defekte in dem zweiten Bereich (58) unter Verwendung des ersten und/oder des zweiten endgültigen Bilds, das in dem ersten Verarbeitungsschritt (45) erlangt wird, erkannt werden.

10. Einheit nach Anspruch 9, **dadurch gekennzeichnet, dass**:
a) die erste Abtastvorrichtung (82) angeordnet ist, damit das erste Wärmezufuhrelement (54) den zweiten Bereich (58) abtastet, indem es zu einer Vielzahl von aufeinanderfolgenden Zeitpunkten, ti, eine Vielzahl von aufeinanderfolgenden Positionen, P(ti), einnimmt, und die Aufnahmevorrichtung (72) programmiert ist, damit das erste lichtempfindliche Oberflächenelement (56) eine Vielzahl von Bildern, I(ti), der Infrarotstrahlung aufnimmt, die von dem zweiten Bereich (58) zu der Vielzahl von Zeitpunkten, ti, emittiert wird; und/oder
b) die zweite Abtastvorrichtung (84) angeordnet ist, damit das zweite Wärmezufuhrelement (60) den zweiten Bereich (58) abtastet, indem es zu einer Vielzahl von aufeinanderfolgenden Zeitpunkten, ti', eine Vielzahl von aufeinanderfolgenden Positionen Pti' einnimmt, und die Aufnahmevorrichtung (72) programmiert ist, damit das zweite lichtempfindliche Oberflächenelement (62) eine Vielzahl von Bildern, I(ti'), der Infrarotstrahlung aufnimmt, die von dem zweiten Bereich (58) zu der Vielzahl von Zeitpunkten, ti', emittiert wird;
wobei der Rechner (88) programmiert ist, um während des ersten Verarbeitungsschritts (40) die folgenden Vorgänge auszuführen:
c) für jedes Bild I(ti), das von dem ersten lichtempfindlichen Flächenelement (56) aufgenommen wird, Bestimmen des gegebenen Zeitpunkts, ti, aus der Vielzahl von Zeitpunkten, zu dem das Bild, I(ti), aufgenommen wird, und Extrahieren einer Vielzahl von ersten Punkten aus dem Bild I(ti), die der Position des ersten Wärmezufuhrelements (54) zu einem zweiten gegebenen Zeitpunkt ti2 entsprechen, wobei der zweite gegebene Zeitpunkt ti2 gleich wie der gegebene Zeitpunkt, ti, plus einer vorbestimmten Zeitverschiebung ΔT ist; Erstellen des ersten endgültigen Bilds durch Überlagern der ersten Punkte, die aus allen Bildern, I(ti), extrahiert werden, die von dem ersten lichtempfindlichen Oberflächenelement (56) aufgenommen werden; und/oder
d) für jedes von dem zweiten lichtempfindlichen Oberflächenelement (62) aufgenommene Bild, I(ti'), Bestimmen des gegebenen Zeitpunkts, ti', aus der Vielzahl von Zeitpunkten, zu dem das Bild, I(ti'), aufgenommen wird, und Extrahieren des Bilds, I(ti'), aus dem Bild, I(ti'), eine Vielzahl von zweiten Punkten, die der Position des zweiten Wärmezufuhrelements (60) zu einem zweiten gegebenen Zeitpunkt, ti2', entsprechen, wobei der zweite gegebene Zeitpunkt, ti2', gleich wie der gegebene Zeitpunkt, ti', plus einer vorbestimmten Zeitverschiebung ΔT', ist; Erstellen des zweiten endgültigen Bilds durch Überlagern der zweiten Punkte, die aus allen aufgenommen Bildern I(ti') extrahiert werden, durch das zweite lichtempfindliche Oberflächenelement (62).

11. Verfahren nach einem der Ansprüche 1 bis 7, **dadurch gekennzeichnet, dass** das Werkstück im Verlauf von jeder Sequenz umbeweglich ist.

## Claims

1. A photothermal examination method of a part, the method comprising a first sequence having the following steps:
- step 11: scanning a first zone (50) of a surface (52) of the part with a first heat input element (54), the scanning being done along a plurality of lines substantially parallel to a first direction (D1);
- step 12: acquiring an image of the infrared radiation emitted by said first zone (50) using a first photosensitive surface element (56);
the method further comprises the following steps:
- step 13: scanning a second zone (58) of the surface (52) of the part with a second heat input element (60), the scanning being done along a plurality of lines substantially parallel to a second direction (D2);
- step 14: acquiring an image of the infrared radiation emitted by said second zone (60) using a second photosensitive surface element (62);
the method further comprising at least one second sequence having the following steps:
- step 21: scanning the second zone (58) of the surface (52) of the part with the first heat input element (54), the scanning being done along a plurality of lines substantially parallel to the first direction (D1);
- step 22: acquiring an image of the infrared radiation emitted by said second zone (58) using the first photosensitive surface element (56);
- step 23: scanning a third zone (64) of the surface (52) of the part with the second heat input element (60), the scanning being done along a plurality of lines substantially parallel to the second direction (D2);
- step 24: acquiring an image of the infrared radiation emitted by said third zone (64) using the second photosensitive surface element (62);
each zone of the surface (52) of the part is scanned during a sequence with the first heat input element (54) along a plurality of lines parallel to the first direction (D1), and during another sequence with the second heat input element (60) along a plurality of lines parallel to the second direction (D2), images of the infrared radiation emitted by said zone being acquired by the first photosensitive surface element (56) during said sequence and by the second photosensitive surface element (62) during said other sequence;
the second direction (D2) forms a first non-zero angle (α) with the first direction (D1), said first angle (α) preferably being larger than 30°;
the first and second heat input elements (54, 60) are generated by a laser with a defined geometric shape;
the first and second zones (50, 58) are scanned simultaneously;
the second and third zones being scanned simultaneously;
the first and second photosensitive surfaces (56, 62) being separate from one another.

2. Method according to claim 1, **characterized in that** the first and second photosensitive surface elements (56, 62) are two parts of a same photosensitive surface (70) of a matricial sensor (72).

3. Method according to claim 1 or 2, **characterized in that** it comprises a step (15) for moving the first and second photosensitive surface elements (56, 62) relative to the part between the first sequence and the second sequence.

4. Method according to anyone of the claims 1 to 3, **characterized in that** it comprises, after the first and second sequence:
- a first processing step (40), in which first and/or second final images of the second zone (58) are calculated respectively from images of the infrared radiation emitted by said second zone (58) and respectively collected by the first and/or second photosensitive surface elements (56, 62), respectively during the second and/or first sequences;
- a second processing step (45), in which any structural defects in the second zone (58) are detected by using the first and/or second final images obtained in the first processing step (40).

5. The method according to claim 4, **characterized in that**:
a) during the second sequence, the first heat input element (54) scans the second zone (58) while occupying, at a plurality of successive moments,ti, a plurality of successive positions, P(ti), and the first photosensitive surface element (56) acquires a plurality of images, I(ti), of the infrared radiation emitted by the second zone (58) at said plurality of moments, ti; and/or
b) during the first sequence, the second heat input element (60) scans the second zone (58) while occupying, at a plurality of successive moments, ti', a plurality of successive positions, P(ti'), and the second photosensitive surface element (62) acquires a plurality of images, I(ti'), of the infrared radiation emitted by the second zone (58) at said plurality of moments, ti';
and **in that** the first processing step (40) comprises the following operations:
c) for each image, I(ti), acquired during the second sequence, determining the given moment, ti, from the plurality of moments at which said image, I(ti), was acquired and extracting, from said image, I(ti), a plurality of first points corresponding to the position, P(ti2), of the first heat input element (54) at a second given moment, ti2, the second given moment, ti2, being equal to the given moment, ti, plus a predetermined time shift, ΔT; constituting the first final image by superimposing the first point extracted from all of the images, I(ti), acquired during the second sequence; and/or
d) for each image, I(ti'), acquired during the first sequence, determining the given moment, ti', from the plurality of moments at which said image, I(ti'), was acquired and extracting, from said image, I(ti'), a plurality of second points corresponding to the position of the second heat input element (60) at a second given moment, ti2', the second given moment, ti2', being equal to the given moment, ti', plus a predetermined time shift, ΔT'; constituting the second final image by superimposing the second point extracted from all of the images, I(ti'), acquired during the first sequence.

6. The method according to any one of the preceding claims, **characterized in that**, during the first sequence, the first photosensitive surface element (56) acquires images of the infrared radiation emitted by a first object field (74) containing the first zone (50), and the second photosensitive surface element (62) acquires images of the infrared radiation emitted by a second object field (76) containing the second zone (58), the first and second object fields (74, 76) being fixed during the first sequence.

7. The method according to claim 6, **characterized in that** during the first sequence, the first photosensitive surface element (56) acquires images of the infrared radiation emitted by at least all of the first zone (50), and the second photosensitive surface element (62) acquires images of the infrared radiation emitted by at least all of the second zone (58).

8. A photothermal examination unit for a part, said unit (80) comprising:
- a first scanning device (82) for scanning a first zone (50) of a surface (52) of the part with a first heat input element (54), arranged to perform the scanning along a plurality of lines substantially parallel to a first direction (D1);
- an acquisition device (72) comprising a first photosensitive surface element (56) arranged to acquire images of the infrared radiation emitted by said first zone (50);
- a second scanning device (84) for scanning a second zone (58) of the surface (52) of the part with a second heat input element (60), arranged to perform the scanning along a plurality of lines substantially parallel to a second direction (D2);
- the acquisition device (72) having a second photosensitive surface element (62) arranged to acquire images of the infrared radiation emitted by said second zone (58);
- the first scanning device (82) is able to scan the second zone (58) of the surface (52) of the part with the first heat input element (54), and to perform the scanning along a plurality of lines substantially parallel to the first direction (D1);
- the first photosensitive surface element (56) is able to acquire images of the infrared radiation emitted by said second zone (58);
- the second scanning device (84) is able to scan a third zone (64) of the surface (52) of the part with the first heat input element (60), and to perform the scanning along a plurality of lines substantially parallel to the second direction (D2);
- the second photosensitive surface element (62) is able to acquire images of the infrared radiation emitted by said third zone (64);
each zone of the surface (52) of the part is scanned during a sequence with the first heat input element (54) along a plurality of lines parallel to the first direction (D1), and during another sequence with the second heat input element (60) along a plurality of lines parallel to the second direction (D2), images of the infrared radiation emitted by said zone being acquired by the first photosensitive surface element (56) during said sequence and by the second photosensitive surface element (62) during said other sequence;
the second direction (D2) forms a first non-zero angle (α) with the first direction (D1), said first angle (α) preferably being larger than 30°;
the first and second heat input elements (54, 60) are generated by a laser with a defined geometric shape;
the first and second scanning devices (82, 84) being arranged to scan the first and second zones (50, 58) simultaneously;
the first and second scanning devices (82, 84) being arranged to scan the second and third zones (58, 64) simultaneously;
the first and second photosensitive surface elements (56, 62) being separate from one another.

9. The unit according to claim 8, **characterized in that** it comprises a computer (88) programmed to perform:
- a first processing step (40), in which first and/or second final images of the second zone (58) are calculated respectively from images of the infrared radiation emitted by said second zone (58) and respectively collected by the first and/or second photosensitive surface elements (56, 62), respectively during the first and/or second sequences;
- a second processing step (45), in which any structural defects in the second zone (58) are detected by using the first and/or second final images obtained in the first processing step (45).

10. The unit according to claim 9, **characterized in that**
a) the first scanning device (82) is arranged so that the first heat input element (54) scans the second zone (58) while occupying, at a plurality of successive moments, ti, a plurality of successive positions, P(ti), and the acquisition device (72) is programmed so that the first photosensitive surface element (56) acquires a plurality of images, I(ti), of the infrared radiation emitted by the second zone (58) at said plurality of moments, ti; and/or
b) the second scanning device (84) is arranged so that the second heat input element (60) scans the second zone (58) while occupying, at a plurality of successive moments, ti', a plurality of successive positions, Pti', and the acquisition device (72) is programmed so that the second photosensitive surface element (62) acquires a plurality of images, I(ti'), of the infrared radiation emitted by the second zone (58) at said plurality of moments, ti';
the computer (88) being programmed to carry out the following operations during the first processing step (40):
c) for each image, I(ti), acquired by the first photosensitive surface element (56), determining the given moment, ti, from the plurality of moments at which that image, I(ti), was acquired and extracting, from said image, I(ti), a plurality of first points corresponding to the position of the first heat input element (54) at a second given moment, ti2, the second given moment, ti2, being equal to the given moment, ti, plus a predetermined time shift, ΔT; constituting the first final image by superimposing the first point extracted from all of the images, I(ti), acquired by the first photosensitive surface element (56); and/or
d) for each image, I(ti'), acquired by the second photosensitive surface element (62), determining the given moment, ti', from the plurality of moments at which said image, I(ti'), was acquired and extracting, from said image, I(ti'), a plurality of second points corresponding to the position of the second heat input element (60) at a second given moment, ti2', the second given moment, ti2' being equal to the given moment, ti', plus a predetermined time shift, ΔT'; constituting the second final image by superimposing the second points extracted from all of the images, I(ti'), acquired by the second photosensitive surface element (62).

11. The method according to any one of claims 1 to 7, **characterized in that** the part
In the method according to the invention, first and second zones (50, 58) of the surface to be characterized are scanned simultaneously, and first and second photosensitive surfaces (56, 62) separate from one another acquire images of the infrared radiation emitted by these two zones.
Figure 2
